(19) Europäisches Patentamt
European Patent Office
Office européen des brevets

(11) **EP 1 928 725 B1**

(12) **FASCICULE DE BREVET EUROPÉEN**

(45) Date de publication et mention
de la délivrance du brevet:
**25.03.2009 Bulletin 2009/13**

(21) Numéro de dépôt: **06794365.4**

(22) Date de dépôt: **29.08.2006**

(51) Int Cl.:
***B62M 3/04*** *(2006.01)*     ***B62M 1/02*** *(2006.01)*

(86) Numéro de dépôt international:
**PCT/FR2006/001999**

(87) Numéro de publication internationale:
**WO 2007/036616 (05.04.2007 Gazette 2007/14)**

(54) **PROCÉDÉ ET DISPOSITIF DE PÉDALAGE**

PEDALVERFAHREN UND -VORRICHTUNG

PEDALLING METHOD AND DEVICE

(84) Etats contractants désignés:
**AT BE BG CH CY CZ DE DK EE ES FI FR GB GR HU IE IS IT LI LT LU LV MC NL PL PT RO SE SI SK TR**
Etats d'extension désignés:
**AL BA HR MK RS**

(30) Priorité: **27.09.2005 FR 0509871**

(43) Date de publication de la demande:
**11.06.2008 Bulletin 2008/24**

(73) Titulaire: **Dreamslide**
**91440 Bures sur Yvette (FR)**

(72) Inventeur: **GOBILLARD, Jean-Marc**
**91440 Bures sur Yvette (FR)**

(74) Mandataire: **Pontet, Bernard**
**Pontet Allano & Associés s.e.l.a.r.l.**
**25, Rue Jean Rostand**
**Parc Club Orsay Université**
**91893 Orsay Cedex (FR)**

(56) Documents cités:
**FR-A- 2 747 362**      **US-A- 5 095 772**

EP 1 928 725 B1

## Description

### Domaine technique

La présente invention concerne un procédé de pédalage notamment adapté à une position debout d'un utilisateur. Elle concerne aussi un dispositif de pédalage ou pédalier mettant en oeuvre ce procédé.

Un tel dispositif permet à un utilisateur de pédaler tout en recréant des mouvements naturels proches d'une marche ou d'une course à pied. Le domaine de l'invention est plus particulièrement celui des véhicules à roues mus par la pression des pieds d'un utilisateur, ou celui des dispositifs d'entraînement sportif statiques. On utilisera dans la suite de ce document le mot "cycle" pour désigner tout véhicule à roues mû par la pression des pieds d'un utilisateur, ou tout appareil d'entraînement sportif statique.

### Etat de la technique antérieure

En position debout, à faible ou moyen régime de pédalage (trente à soixante tours par minute), un utilisateur peut développer sur un pédalier un couple moteur plus important qu'en position assise. De plus, la position debout est plus naturelle pour un être humain pour se déplacer que la position assise: la position debout évite en effet des problèmes comme le mal de dos ou de cou. Enfin, un pédalier adapté à la position debout permanente d'un utilisateur permet la réalisation d'un cycle particulièrement bien adapté à la ville, sans selle, léger et aux dimensions très compactes.

Cependant, un tel cycle ne peut pas comprendre n'importe quel type de pédalier. Un pédalier classique comprend un arbre moteur monté sur des roulements et sur lequel sont fixées de manière rigide une manivelle gauche et une manivelle droite, perpendiculairement à l'arbre moteur. Chaque manivelle comprend à son extrémité libre une pédale qui tourne autour d'un axe perpendiculaire à la manivelle et parallèle à l'arbre moteur. Le mouvement de l'axe des pédales est un cercle centré sur l'arbre moteur et l'angle entre les deux manivelles a une valeur fixe de cent quatre vingts degrés. Un tel pédalier n'est pas adapté à une position debout permanente d'un utilisateur: pour ce type de pédalier, le rendement du pédalage, c'est-à-dire le rapport entre la puissance motrice fournie au pédalier et la puissance consommée par les muscles de l'utilisateur, est bien plus faible pour une position debout que pour une position assise de l'utilisateur. Par la suite, on appellera point mort bas d'une pédale la position la plus basse d'une pédale, et point mort haut la position la plus haute d'une pédale.

Partant du principe que le mouvement rotatif circulaire est la cause du mauvais rendement d'un pédalier classique en position debout d'un utilisateur, des inventeurs ont proposé plusieurs types de solutions:

- des dispositifs où les pieds d'un utilisateur debout pédalent selon un mouvement alternatif en piston, comme divulgués dans les documents US 20020163159A1 intitulé "Foot pump scooter" et WO 0230732A1 intitulé "Step bike",

- des dispositifs où les pieds d'un utilisateur debout pédalent selon un cercle écrasé dans le sens de la hauteur, la forme du cercle se rapprochant alors d'une ellipse dont le grand axe est horizontal, comme divulgué dans le document US 20030030245A1 intitulé "Step-cycle for exercice, recreation, and transport having telescopically movable pedals",

- des dispositifs comportant des manuelles de longueur variable, comme divulguée dans le document FR-A-2747362.

Le but de la présente invention est de proposer un procédé ou un dispositif de pédalage adapté à une position debout permanente d'un utilisateur, et permettant un mouvement fluide et naturel de l'utilisateur, ledit mouvement étant proche de celui d'une marche ou d'une course à pied.

### Exposé de l'ivention

Cet objectif est atteint avec un procédé de pédalage, comme défini dans la revendication 1, pour provoquer la rotation d'un arbre moteur au moyen de deux pédales actionnées avec un déphasage temporel entre elles suivant des trajectoires courbes fermées respectives ayant une partie haute et une partie basse de part et d'autre d'un plan où les pédales sont à égale hauteur, caractérisé en ce qu'on transmet le mouvement des pédales à l'arbre par l'intermédiaire d'un mécanisme de transmission qui définit pour chaque pédale une plus grande vitesse moyenne dans la partie haute que dans la partie basse, de façon que le plan d'égale hauteur des pédales soit en dessous du milieu de la hauteur des trajectoires fermées.

La hauteur de chaque pédale est définie selon un axe vertical, perpendiculaire à un axe horizontal. Dans toute la suite de ce document, il est entendu que l'axe vertical n'est pas nécessairement parallèle à la force de pesanteur:

- si par exemple l'orientation de chaque pédale (c'est-à-dire l'orientation du plan selon lequel un pied d'un utilisateur repose sur la pédale) est définie par le poids d'un utilisateur, cet axe vertical peut être parallèle à la force de pesanteur,

- si par exemple l'orientation de chaque pédale est définie par une force exercée par un utilisateur, cet axe vertical peut être parallèle à la force, et

- si par exemple l'orientation des pédales est maintenue fixe par rapport à un châssis, cet axe vertical peut être perpendiculaire au sol sur lequel repose ce châssis, et ce quelle que soit l'inctinaison du sol par rapport à la force de pesanteur.

Les trajectoires courbes fermées peuvent avoir des dimensions horizontales et verticales sensiblement égales.

Pour une vitesse de rotation de l'arbre moteur autour de son axe constante, les vitesses des pédales peuvent être périodiques de période sensiblement égale au double du déphasage temporel entre les pédales.

Pour une vitesse de rotation de l'arbre moteur autour de son axe constante, la vitesse de chaque pédale peut être maximale dans la partie haute et minimale dans la partie basse, et le rapport entre la vitesse maximale et la vitesse minimale de chaque pédale peut être sensiblement compris entre deux et trois.

Pour une vitesse de rotation de l'arbre moteur autour de son axe constante, la vitesse de chaque pédale peut être sensiblement maximale à la position la plus haute de sa trajectoire et sensiblement minimale à la position la plus basse de sa trajectoire.

Les vitesses des pédales peuvent être sensiblement égales lorsqu'elles sont dans le plan d'égale hauteur.

Le procédé selon l'invention peut comprendre en outre une utilisation par un utilisateur en position debout sur les pédales.

Le procédé selon l'invention permet de réduire, par rapport à un procédé selon l'art antérieur, l'amplitude d'oscillation du centre de gravité d'un utilisateur pédalant sur les pédales en position debout, et permet ainsi d'augmenter le rendement de pédalage de l'utilisateur dans cette position.

Suivant encore un autre aspect de l'invention, il est proposé un dispositif de pédalage mettant en oeuvre le procédé selon l'invention, comprenant comme défini dans la revendication 8.

- des moyens de couplage pour coupler une rotation d'un arbre moteur autour de son axe aux mouvements déphasés temporellement d'une pédale droite et d'une pédale gauche, et
- des moyens de guidage pour limiter le mouvement de chaque pédale à une trajectoire courbe fermée ayant une partie haute et une partie basse de part et d'autre d'un plan où les pédales sont à égale hauteur,

caractérisé en ce que les moyens de couplage et les moyens de guidage appartiennent à un mécanisme de transmission qui définit pour chaque pédale une plus grande vitesse moyenne dans la partie haute que dans la partie basse, de façon que le plan d'égale hauteur des pédales soit en dessous du milieu de la hauteur des trajectoires fermées.

Le mécanisme de transmission peut être adapté pour égaliser sensiblement les vitesses des pédales lorsqu'elles sont dans le plan d'égale hauteur.

Selon une première famille de modes de réalisation de dispositif selon l'invention, l'arbre moteur peut traverser un châssis et le mécanisme de transmission peut comprendre pour chaque pédale:

- une manivelle de guidage articulée au châssis et désolidarisée de l'arbre moteur, et
- un pivot de pédale reliant la pédale à la manivelle de guidage.

Selon une deuxième famille de modes de réalisation de dispositif selon l'invention, le mécanisme de transmission peut comprendre pour chaque pédale:

- une manivelle motrice, solidaire de l'arbre moteur,
- un pivot de transmission reliant la pédale à la manivelle motrice, et
- des moyens de variation de la distance entre l'axe dudit pivot de transmission et l'axe de l'arbre moteur au cours de la rotation de l'arbre.

Selon un premier mode de réalisation de cette seconde famille, l'arbre moteur peut traverser un châssis et le mécanisme de transmission peut comprendre en outre pour chaque pédale:

- une manivelle de guidage, articulée au châssis et désolidarisée de l'arbre moteur,
- un pivot de pédale reliant la pédale à la manivelle de guidage, et
- une bielle portant le pivot de pédale et le pivot de transmission.

Pour ce premier mode de réalisation:

- la pédale peut être solidaire de la bielle,
- chaque manivelle de guidage peut être articulée au châssis par un pivot de châssis sensiblement coaxial avec l'arbre moteur. Pour chaque pédale la distance entre l'axe du pivot de pédale et l'axe du pivot de transmission peut être sensiblement égale à la moitié de la distance entre l'axe du pivot de châssis et l'axe du pivot de pédale.

Selon un second mode de réalisation de cette seconde famille, l'arbre moteur peut traverser un châssis et le mécanisme de transmission peut comprendre en outre pour chaque pédale:

- deux manivelles de guidage, articulées chacune au châssis par un pivot de châssis et désolidarisées de l'arbre moteur,
- deux pivots de pédale reliant chacun la pédale à une des deux manivelles de guidage, et
- une bielle portant le pivot de transmission et solidaire de la pédale.

Pour ce second mode de réalisation, le dispositif de pédalage selon l'invention peut comprendre en outre des moyens pour stabiliser les manivelles de guidage, de manière préférentielle un parallélogramme ou un quadrilatère déformable.

Pour ce premier ou second mode de réalisation:

- pour chaque pédale la distance minimale entre l'axe du pivot de transmission et l'axe de l'arbre moteur peut être sensiblement égale à la moitié de la distance entre l'axe du pivot de châssis et l'axe du pivot de pédale reliés par une des manivelles de guidage, et
- pour chaque pédale la distance maximale entre l'axe du pivot de transmission et l'axe de l'arbre moteur peut être sensiblement égale à 1,5 fois la distance entre l'axe du pivot de châssis et l'axe du pivot de pédale reliés par une des manivelles de guidage.

Pour cette deuxième famille de modes de réalisation de dispositif selon l'invention, les moyens de variation de distance peuvent comprendre pour chaque pédale:

- une rainure le long de la manivelle motrice, et
- un galet libre de se déplacer en roulant dans la rainure, et relié au pivot de transmission.

Pour chaque pédale, la rainure peut être de largeur sensiblement supérieure au diamètre du galet, de sorte que le galet est libre de se déplacer dans la longueur de la rainure en roulant sur une face à la fois de la rainure.

Toujours pour cette deuxième famille de modes de réalisation, les moyens de variation de distance peuvent comprendre des moyens pour faire varier la longueur effective des manivelles motrices, comme une glissière.

Selon une troisième famille de modes de réalisation de dispositif selon l'invention, le mécanisme de transmission peut comprendre:

- un arbre secondaire ayant un axe sensiblement parallèle à l'arbre moteur,
- des moyens de couplage d'une rotation de l'arbre moteur autour de son axe à une rotation de l'axe de l'arbre secondaire autour de l'axe de l'arbre moteur et à une rotation de l'arbre secondaire autour de son àxe,

et pour chaque pédale:

- une manivelle secondaire, solidaire de l'arbre secondaire, et
- un pivot de pédale reliant la pédale à la manivelle secondaire.

Pour cette troisième famille de modes de réalisation:

- les moyens de couplage peuvent être agencés de sorte que l'axe de l'arbre secondaire est libre en rotation autour de l'axe de l'arbre moteur à une vitesse angulaire sensiblement double de la vitesse angulaire de rotation de l'arbre secondaire autour de son axe, et
- les manivelles secondaires peuvent être sensiblement quatre fois plus longues que le rayon de rotation de l'axe de l'arbre, secondaire autour de l'axe de l'arbre moteur.

Selon une quatrième famille de modes de réalisation de dispositif selon l'invention, le mécanisme de transmission peut comprendre pour chaque pédale:

- une première manivelle, solidaire de l'arbre moteur,
- une seconde manivelle reliée à la première manivelle par un pivot secondaire, et
- un pivot de pédale reliant la pédale à la seconde manivelle.

Pour cette quatrième famille de modes de réalisation, et pour chaque pédale:

- l'arbre moteur et les première et seconde manivelles peuvent être couplés de sorte que la seconde manivelle est libre en rotation autour de l'axe du pivot secondaire à une vitesse angulaire sensiblement double de la vitesse angulaire de rotation de l'axe du pivot secondaire autour de l'axe de l'arbre moteur, et
- la première manivelle peut être sensiblement quatre fois plus longue que la seconde manivelle.

Un dispositif de pédalage selon l'invention peut comprendre en outre des moyens de transmission d'une puissance motrice de l'arbre moteur à un dispositif de consommation de cette puissance.

Un dispositif de pédalage selon l'invention peut être intégré à un véhicule ou un appareil d'entraînement sportif statique.

Description des figures et modes de réalisation

D'autres avantages et caractéristiques de l'invention apparaîtront à l'examen de la description détaillée de mises en oeuvre nullement limitatives, et des dessins annexés suivants, dans lesquels :

- la figure 1 illustre l'évolution temporelle de la vitesse d'une pédale droite et. d'une pédale gauche d'un dispositif selon l'invention, le dispositif comprenant en outre un arbre moteur et dans le cas particulier où la vitesse angulaire de rotation de cet arbre autour de son axe est constante,
- la figure 2 est une vue schématique de profil d'une première famille de modes de réalisation d'un dispositif selon l'invention,
- la figure 3 est une vue schématique de profil d'une deuxième famille de modes de réalisation d'un dispositif selon l'invention,

- la figure 4 est une vue schématique de profil d'une troisième famille de modes de réalisation d'un dispositif selon l'invention,
- la figure 5 est une vue schématique de profil d'une quatrième famille de modes de réalisation d'un dispositif selon l'invention,
- la figure 6 est une vue d'ensemble d'un premier mode de réalisation d'un dispositif selon l'invention,
- les figures 7, 8, 9 et 10 illustrent des vues schématiques de profil de quatre états successifs du premier mode de réalisation de dispositif selon l'invention,
- les figures 11, 12, 13 et 14 illustrent des vues schématiques de profil de quatre états successifs d'un deuxième mode de réalisation d'un dispositif selon l'invention,
- la figure 15 illustre une vue de profil du deuxième mode de réalisation d'un dispositif selon l'invention, et
- la figure 16 illustre l'évolution temporelle de la hauteur d'une pédale droite et d'une pédale gauche d'un dispositif selon l'invention, le dispositif comprenant en outre un arbre moteur et dans le cas particulier où la vitesse angulaire de rotation de cet arbre autour de son axe est constante.

Lorsque l'on observe un utilisateur en position debout pédalant sur un pédalier classique, on remarque une oscillation verticale importante de son centre de gravité, la position verticale du centre de gravité n'étant plus maintenue sensiblement fixe par un point fixe comme une selle. L'utilisateur gaspille ainsi de l'énergie, ladite énergie étant dissipée lorsqu'une pédale atteint un point mort bas. Le rendement du pédalage est donc faible. Si l'utilisateur essaye de réduire l'amplitude de l'oscillation de son centre de gravité, il doit fournir un effort statique, tout particulièrement au niveau de ses quadriceps, et cet effort ne produit aucune puissance motrice. Le rendement du pédalage est donc aussi faible.

La description des figures va notamment permettre d'expliquer comment l'oscillation du centre de gravité d'un utilisateur debout sur un dispositif selon l'invention est réduite par rapport à l'oscillation de ce même utilisateur sur un pédalier classique, ce qui permet audit utilisateur d'un pédalier selon l'invention d'avoir un mouvement fluide et naturel, proche de celui d'une marche ou d'une course à pied, ainsi qu'un bon rendement de pédalage par rapport aux dispositifs de pédalage selon l'art antérieur.

Un dispositif de pédalage selon l'invention comprend de manière générale:

- des moyens de couplage pour coupler une rotation d'un arbre moteur autour de son axe aux mouvements déphasés temporellement d'une pédale droite et d'une pédale gauche, et
- des moyens de guidage pour limiter le mouvement de chaque pédale à une trajectoire courbe fermée ayant une partie haute et une partie basse de part et d'autre d'un plan où les pédales sont à égale hauteur,

et est caractérisé en ce que les moyens de couplage et les moyens de guidage appartiennent à un mécanisme de transmission qui définit pour chaque pédale une plus grande vitesse moyenne dans la partie haute que dans la partie basse, de façon que le plan d'égale hauteur des pédales soit en dessous du milieu de la hauteur des trajectoires fermées.

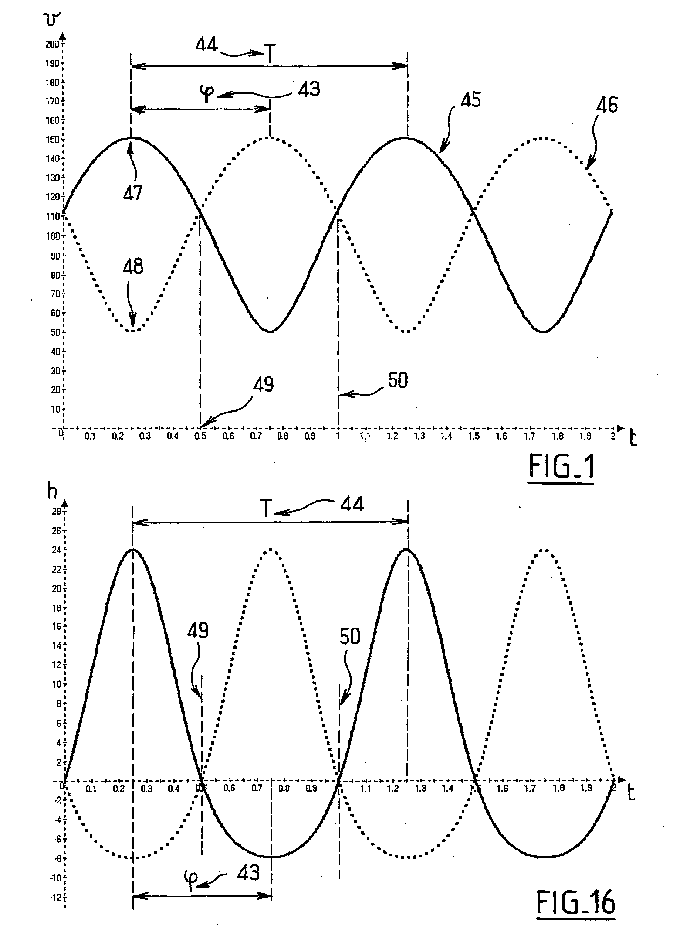

On va tout d'abord décrire, en référence aux figures 1 et 16, l'évolution de la vitesse v et de la hauteur h de la pédale droite et de la pédale gauche d'un dispositif selon l'invention en fonction du temps t, dans le cas particulier où la vitesse angulaire de rotation de l'arbre moteur autour de son axe est constante. Pour l'exemple illustré sur la figure 1, l'unité de vitesse en ordonnées est le centimètre par seconde, l'unité de temps en abscisses est la seconde, et l'arbre moteur tourne à une vitesse constante de un tour par seconde. Pour l'exemple illustré sur la figure 16, l'unité de hauteur en ordonnées est le centimètre, l'unité de temps en abscisses est la seconde, et l'arbre moteur tourne à une vitesse constante de un tour par seconde. Les pédales et l'arbre moteur sont agencés de manière à provoquer la rotation d'un arbre moteur au moyen de deux pédales actionnées avec un déphasage temporel φ 43 entre elles suivant des trajectoires courbes fermées respectives ayant une partie haute et une partie basse de part et d'autre d'un plan où les pédales sont à égale hauteur, en transmettant le mouvement des pédales à l'arbre par l'intermédiaire d'un mécanisme de transmission qui définit pour chaque pédale une plus grande vitesse moyenne dans la partie haute que dans la partie basse, de façon que le plan d'égale hauteur des pédales soit en dessous du milieu de la hauteur des trajectoires fermées. Pour une vitesse de rotation de l'arbre moteur autour de son axe constante, l'évolution des vitesses des pédales est périodique, la vitesse 45 de la pédale droite et la vitesse 46 de la pédale gauche étant périodiques de période T 44 sensiblement égale au double du déphasage temporel 43. Sur la figure 16, on a posé comme origine des hauteurs (h=0) la hauteur du plan d'égale hauteur des pédales. On remarque sur cette figure que la position la plus haute de chaque pédale est plus éloignée du plan d'égale hauteur que la position la plus basse de chaque pédale; autrement dit, le plan d'égale hauteur des pédales est situé au dessous du milieu de la hauteur des trajectoires des pédales.

Les figures 1 et 16 correspondent au cas préférentiel où la vitesse de chaque pédale passe par un maximum 47 à la position la plus haute de sa trajectoire et par, un minimum 48 à la position la plus basse de sa trajectoire, et où de plus le maximum 47 de la vitesse d'une pédale a lieu au même moment que le minimum 48 de la vitesse de l'autre pédale: autrement dit, lorsqu'une pédale atteint son point mort haut, l'autre pédale atteint son point mort bas. Durant une période 44, les pédales sont simultanément à des positions de même hauteur à deux instants d'égalisations 49, 50, correspondant à la descente puis à la montée des pédales. On remarque sur la figure 1 que le rapport entre le maximum 47 et le minimum 48 de la vitesse est de l'ordre de trois. Plusieurs modes de réalisation permettent d'obtenir un dispositif de pédalage mettant en oeuvre ce procédé.

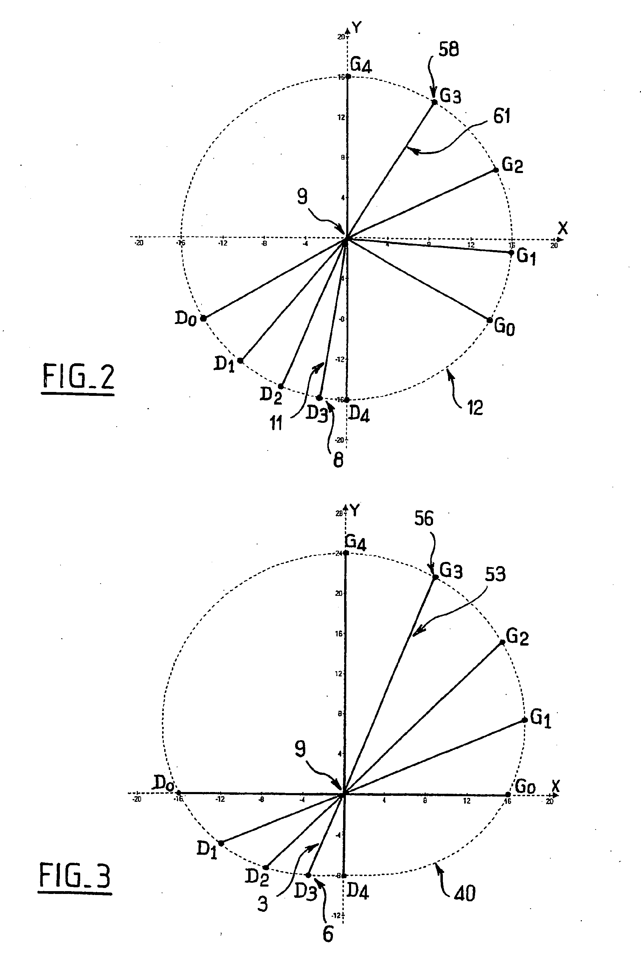

On va décrire, en référence aux figures 2 à 5, des vues schématiques de profil du côté gauche (donc le sens de rotation de l'axe moteur est anti-horaire) de quatre familles de modes de- réalisation d'un dispositif selon l'invention. Ces modes de réalisation comprennent deux pédales droite et gauche, et un arbre moteur libre en rotation autour de son axe 9. Sur ces figures sont représentés un axe horizontal X et un axe vertical Y (gradués en unité de longueur arbitraire), ainsi que cinq positions $D_0$, $D_1$, $D_2$, $D_3$ et $D_4$ successives de la pédale droite et cinq positions $G_0$, $G_1$, $G_2$, $G_3$ et $G_4$ successives de la pédale gauche. Les positions de même indice sont simultanées. Pour une vitesse de rotation de l'arbre moteur autour de son axe 9 constante, des positions d'indices successifs sont espacées temporellement d'un seizième de la période du mouvement des pédales.

Chaque mode de réalisation de la première famille illustrée sur la figure 2 comprend une manivelle de guidage droite 11 et une manivelle de guidage gauche 61. L'arbre moteur traverse un châssis. Les manivelles de guidage sont désolidarisées entre elles et de l'arbre moteur, et sont articulées au châssis, par exemple par un pivot ayant un axe parallèle à celui de l'arbre moteur. Chaque mode comprend en outre un pivot de pédale respectivement droit 8 ou gauche 58 reliant la pédale respectivement droite ou gauche à la manivelle de guidage respectivement droite ou gauche. Dans cette famille, les pédales décrivent comme courbe 12 un cercle. Les manivelles de guidage et l'arbre de moteur peuvent par exemple être couplés par un ensemble d'engrenages non circulaires, ou par un ensemble de chaînes et de pignons non circulaires.

Chaque mode de réalisation de la deuxième famille illustrée sur la figure 3 comprend une manivelle motrice droite 3 et gauche 53, solidaires de l'arbre moteur, formant entre elles un angle de cent quatre vingts degrés, et de longueur effective variable. Chaque mode comprend en outre un pivot de transmission respectivement droit 6 ou gauche 56 reliant la pédale respectivement droite ou gauche à la manivelle motrice respectivement droite ou gauche. Pour cette famille, les pédales ne décrivent pas forcément comme courbe 40 un cercle.

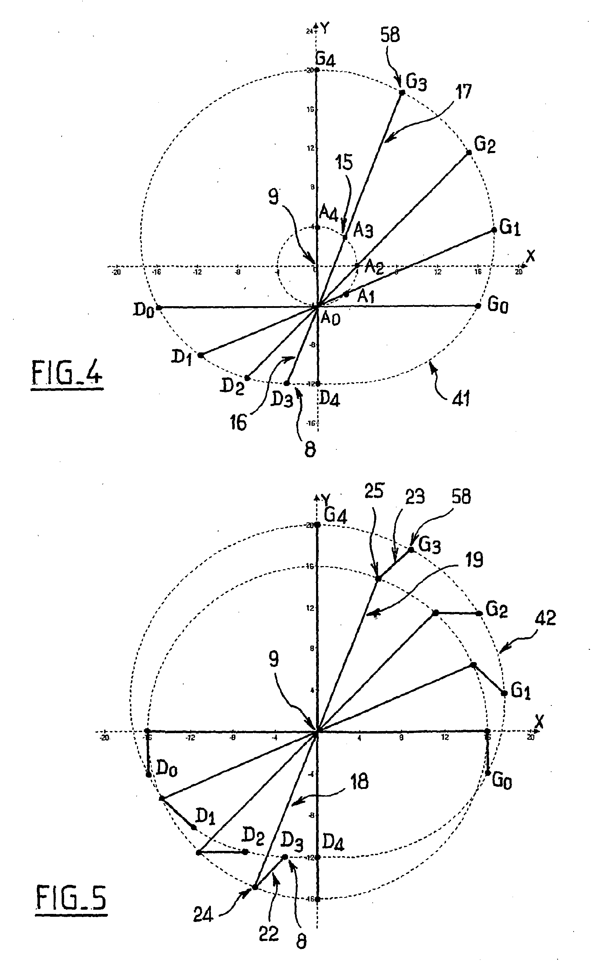

Chaque mode de réalisation de la troisième famille illustrée sur la figure 4 comprend un arbre secondaire ayant un axe 15 sensiblement parallèle à l'arbre moteur, et des moyens de couplage d'une rotation de l'arbre moteur autour de son axe 9 à une rotation de l'axe 15 de l'arbre secondaire autour de l'axe 9 de l'arbre moteur et à une rotation de l'arbre secondaire autour de son axe 15. Chaque mode comprend en outre une manivelle secondaire droite 16 et gauche 17, solidaires de l'arbre secondaire, formant entre elles un angle de cent quatre vingts degrés, ainsi qu'un pivot de pédale respectivement droit 8 ou gauche 58 reliant la pédale respectivement droite ou gauche à la manivelle secondaire respectivement droite ou gauche. Si:

- les moyens de couplage sont agencés de sorte que l'axe 15 de l'arbre secondaire est libre en rotation autour de l'axe 9 de l'arbre moteur à une vitesse angulaire sensiblement double de la vitesse angulaire de rotation de l'arbre secondaire autour de son axe 15, et
- les manivelles secondaires droite 16 et gauche 17 sont sensiblement quatre fois plus longues que le rayon de rotation de l'axe 15 de l'arbre secondaire autour de l'axe 9 de l'arbre moteur,

alors les modes de réalisation de cette famille mettent en oeuvre un procédé selon l'invention. Pour cette famille, les pédales ne décrivent pas forcément comme courbe 41 un cercle.

Chaque mode de réalisation de la quatrième famille illustrée sur la figure 5 comprend une première manivelle droite 18 et gauche 19, solidaires de l'arbre moteur, et formant entre elles un angle de cent quatre vingts degrés. Chaque mode comprend en outre une seconde manivelle respectivement droite 22 ou gauche 23 reliée à la première manivelle respectivement droite ou gauche par un pivot secondaire respectivement droit 24 ou gauche 25, ainsi qu'un pivot de pédale respectivement droit 8 ou gauche 58 reliant la pédale respectivement droite ou gauche à la seconde manivelle respectivement droite ou gauche. Si:

- l'arbre moteur et les premières 18, 19 et secondes 22, 23 manivelles sont couplés de sorte que la seconde manivelle respectivement droite 22 ou gauche 23 est libre en rotation autour de l'axe du pivot secondaire respectivement droit 24 ou gauche 25 à une vitesse angulaire sensiblement double de la vitesse angulaire de rotation de l'axe du pivot secondaire respectivement droit 24 ou gauche 25 autour de l'axe 9 de l'arbre moteur, et
- la première manivelle respectivement droite 18 ou gauche 19 est sensiblement quatre fois plus longue que la seconde manivelle respectivement droite 22 ou gauche 23.

alors les modes de réalisation de cette famille mettent en oeuvre un procédé selon l'invention. Pour cette famille, les pédales ne décrivent pas forcément comme courbe 42 un cercle.

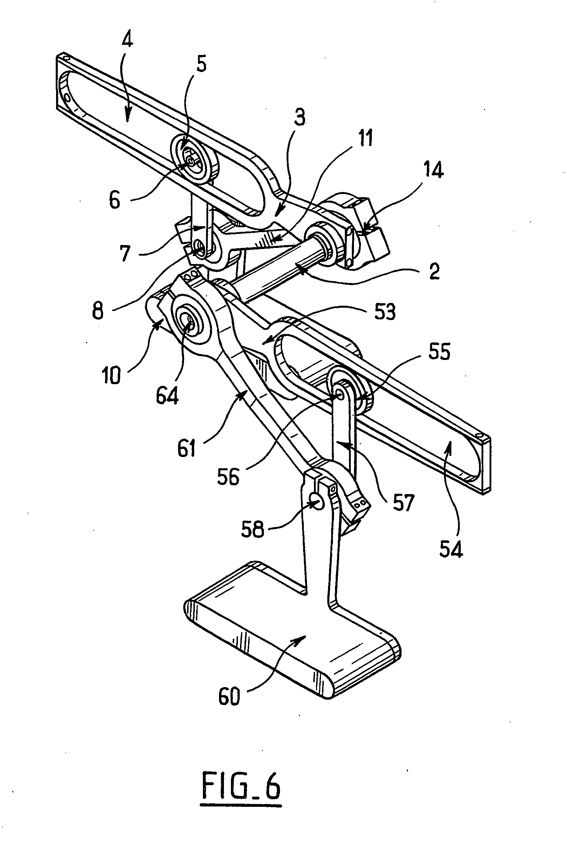

On va maintenant décrire, en référence aux figures 6, 7, 8, 9 et 10 un premier mode de réalisation d'un dispositif de pédalage (ou pédalier) selon l'invention. Ce premier mode appartient à la fois à la première et à la deuxième famille de modes décrites précédemment. La figure 6 illustre une vue générale du premier mode de réalisation d'un dispositif de pédalage selon l'invention.

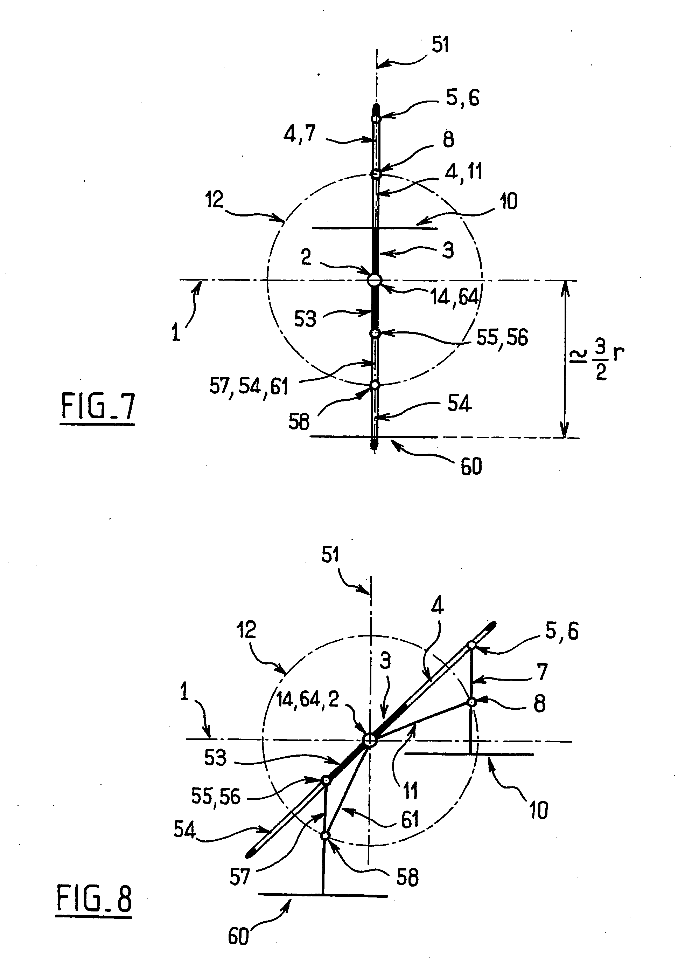

Les figures 7, 8, 9 et 10 illustrent des vues schématiques de profil de quatre états successifs de ce même dispositif en rotation. Dans ce premier mode de réalisation, le dispositif de pédalage comprend un arbre moteur 2 sensiblement perpendiculaire au plan formé par un axe horizontal 1 et un axe vertical 51. Ces axes ne sont pas représentés sur la figure 1. On se place ici dans le cas où on définit l'axe vertical sensiblement parallèle à la force de pesanteur. L'axe vertical sert de support à une échelle des hauteurs définissant la hauteur d'un objet quelconque tel qu'une pédale par exemple. L'arbre moteur traverse un châssis et est libre de tourner autour de son axe par rapport au châssis. L'arbre moteur 2 est solidaire d'une pièce telle qu'une couronne dentée ou lisse, non représentée sur ces figures, se trouvant à l'intérieur ou à l'extérieur du châssis et permettant de transmettre via une chaîne, une courroie ou un arbre, une puissance motrice générée par une rotation de l'arbre moteur 2 à tout dispositif consommant cette puissance tel qu'une roue arrière, ou un système de dissipation de l'énergie d'un appareil d'entraînement sportif statique. L'arbre moteur est solidaire à droite du plan formé par les axes 1 et 51 d'une manivelle motrice droite 3, et à gauche de ce plan d'une manivelle motrice gauche 53. Les deux manivelles motrices sont sensiblement perpendiculaires à l'arbre moteur, et font entre elles un angle sensiblement égal à cent quatre vingts degrés. Ainsi, une rotation de l'arbre moteur est solidaire de rotations des manivelles motrices. La manivelle motrice respectivement droite 3 ou gauche 53 est reliée à une bielle respectivement droite 7 ou gauche 57 par l'intermédiaire d'un pivot de transmission respectivement droit 6 ou gauche 56 d'axe sensiblement parallèle à l'arbre moteur. Le pivot de transmission respectivement droit ou gauche est solidaire de la bielle respectivement droite ou gauche sensiblement perpendiculaire à l'arbre moteur. La bielle respectivement droite ou gauche est solidaire de l'axe d'un pivot de pédale respectivement droit 8 ou gauche 58, lui-même solidaire d'une pédale respectivement droite 10 ou gauche 60. L'axe des pivots de pédale est sensiblement parallèle à l'arbre moteur. Une manivelle de guidage respectivement droite 11 ou gauche 61 est libre de tourner autour d'un pivot de châssis respectivement droit 14 ou gauche 64 ici coaxial avec l'arbre moteur 2, et autour de l'axe du pivot de pédale respectivement droit 8 ou gauche 58. Chaque manivelle de guidage est donc articulée au châssis via l'arbre moteur qui tient rôle d'axe pour les pivots de châssis. Ce premier mode de réalisation comprend en outre des moyens respectivement droits 4, 5, ou gauche 54, 55 pour faire varier la distance entre le pivot de transmission respectivement droit 6 ou gauche 56 et l'axe de l'arbre moteur 2. Ces moyens de variation de distance comprennent une rainure longitudinale respectivement droite 4 ou gauche 54 dans laquelle roule un galet respectivement droit 5 ou gauche 55. Cette rainure longitudinale est très légèrement plus large que le diamètre du galet, de sorte que le galet s'appuie alternativement sur chacune des deux faces de la rainure longitudinale sans frotter sur l'autre face. Le galet possède une bande de roulement de surface prouvant être convexe ou concave, et dans ce cas les deux faces de la rainure longitudinale ont une forme complémentaire de celle du galet de sorte que la surface de contact entre l'une des deux faces de la rainure longitudinale et le galet soit toujours une ligne courbe de forme convexe ou concave et qu'ainsi le galet ne puisse sortir de la rainure longitudinale. Le galet respectivement droit 5 ou gauche 55 tourne autour de l'axe du pivot de transmission respectivement droit 6 ou gauche 56. La liaison du galet et de l'axe du pivot de transmission peut se faire par l'intermédiaire d'une rotule (non représentée) qui leur permet de tourner l'un par rapport à l'autre même dans le cas où l'axe du pivot de transmission n'est pas parfaitement perpendiculaire à la manivelle motrice.

Le rôle des manivelles motrices est de transmettre des efforts moteurs à l'arbre moteur. Le rôle des manivelles de guidage est de guider les pédales dans un mouvement circulaire et donc de subir tous les efforts autres que les couples moteurs. Le rôle des bielles est de coupler les manivelles motrices et de guidage, et de transmettre les efforts moteurs aux manivelles motrices. Le rôle des rainures longitudinales est de faire varier la distance entre les axes des pivots de transmission et de l'arbre moteur.

De manière préférentielle:

- pour chaque pédale la distance entre l'axe du pivot de pédale 8 ou 58 et l'axe du pivot de transmission 6 ou 56 est sensiblement égale à la moitié de la distance entre l'axe du pivot de châssis 4 ou 64 et l'axe du pivot de pédale 8 ou 58,
- pour chaque pédale la distance minimale entre l'axe du pivot de transmission 6 ou 55, et l'axe de l'arbre moteur 2 est sensiblement égale à la moitié de la distance entre l'axe du pivot de châssis 4 ou 64 et l'axe du pivot de pédale 8 ou 58, et
- pour chaque pédale la distance maximale entre l'axe du pivot de transmission 6 ou 56 et l'axe de l'arbre moteur 2 est sensiblement égale à 1,5 fois la distance entre l'axe du pivot de châssis 4 ou 64 et l'axe du pivot de pédale 8 ou 58.

Les quatre états successifs du pédalier représentés sur les figures 7, puis 8, puis 9 et enfin 10 se succèdent lorsque l'arbre moteur 2 fait un quart de tour dans le sens des aiguilles d'une montre entre chaque figure. Il existe deux, et seulement deux, positions diamétralement opposées pour lesquelles les manivelles motrices droite et gauche sont alignées avec les manivelles de guidage. Une de ces positions est illustrée sur la figure 7. Les pivots, les manivelles, et les rainures étant alignés sur cette figure, et il $\gamma$ est donc difficile de distinguer tous ces éléments.

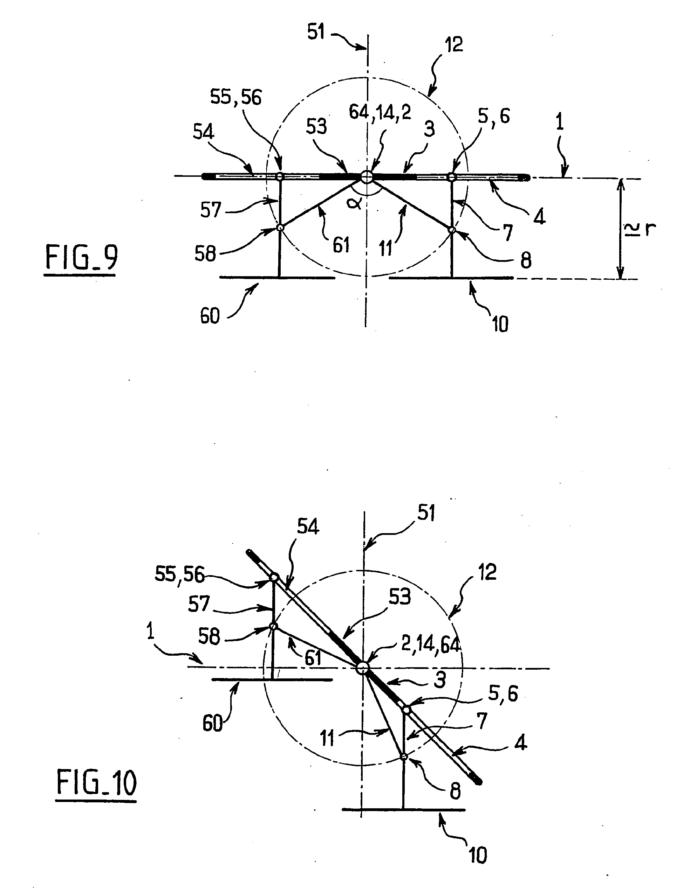

L'avantage d'un mouvement circulaire de pédales est qu'il est adapté pour produire une bonne puissance mécanique et qu'il est simple d'un point de vue mécanique. Lors de la rotation de l'arbre moteur, la pédale droite et la pédale gauche décrivent comme courbe 12 un même cercle (exclusivement représenté sur les figures 7, 8, 9, et 10). Une droite reliant l'axe du pivot de pédale respectivement droit 8 ou gauche 58 au centre du cercle, situé sur l'arbre moteur 2, est parallèle à la manivelle de guidage respectivement droite 11 ou gauche 61. Une position du pivot de pédale droit sur le cercle 12 correspond à une unique position du pivot de pédale gauche sur le cercle 12. L'angle entre la manivelle de guidage droite et la manivelle de guidage gauche varie au cours du mouvement des pédales, et passe par un minimum α lorsque les pédales sont sensiblement à une même hauteur, comme illustré sur la figure 9. Le plan où les pédales sont à égale hauteur est situé en dessous du milieu de la trajectoire circulaire des pédales. En ordre de grandeur, l'angle minimum est égal de manière préférentielle à 120°. Plus l'angle α est petit, plus le dispositif de pédalage selon l'invention s'éloigne d'un pédalier classique. Toujours pour raisonner en ordre de grandeur, on peut voir sur la figure 7 que, lorsque les manivelles motrices sont alignées avec l'axe horizontal 1, la distance entre l'axe horizontal 1 et la pédale gauche 60 est sensiblement égale à $\dfrac{3}{2}r$, avec r le rayon du cercle 12. Lorsque l'arbre moteur tourne d'un quart de tour comme illustré sur la figure 9, la distance entre l'axe horizontal 1 et la pédale gauche 60 est égale à r. Cela permet de déduire une estimation de l'amplitude d'oscillation du centre de gravité d'un utilisateur en position debout permanente avec une jambe tendue sur ce premier mode de réalisation de dispositif de pédalage selon l'invention, de l'ordre de $\dfrac{3}{2}r - r = \dfrac{r}{2}$. Dans le cas d'un pédalier classique, un raisonnement similaire permet d'estimer une amplitude d'oscillation égale à r. Ce premier mode de réalisation de pédalier selon l'invention permet donc de diviser l'amplitude d'oscillation du centre de gravité d'un utilisateur en position debout d'un facteur deux par rapport à un pédalier classique. Ainsi, le mouvement des jambes de l'utilisateur se rapproche de celui de la marche ou la course à pied. En effet, pendant la marche à pied, le pied qui est en contact avec le sol se déplace moins vite, par rapport au centre de gravité du marcheur, que l'autre pied. L'angle α et donc le facteur de division de l'amplitude d'oscillation du centre de gravité par rapport à un pédalier classique dépend des longueurs des bielles, des manivelles, des pédales et dépend aussi des emplacements des pivots.

En passant des figures 7, à 8, puis 9 et enfin 10, on remarque que :

- l'arbre moteur 2 fait un quart de tour dans le sens des aiguilles d'une montre entre chaque figure,
- la pédale droite 10 a une vitesse angulaire qui diminue entre chaque figure, la pédale droite allant sur ces quatre figures de haut en bas, et
- la pédale gauche 60 a une vitesse angulaire qui augmente entre chaque figure, la pédale gauche .allant sur ces quatre figures de bas en haut.

Ainsi une première pédale située plus haut qu'une deuxième pédale a une vitesse plus grande que ladite deuxième pédale. La vitesse d'une pédale à une position de hauteur maximale est maximale, ce qui limite l'effet du point mort haut, et implique qu'à cette position le bras de levier de cette pédale par rapport à l'arbre moteur est lui aussi maximal. La vitesse d'une pédale à une position de hauteur minimale est minimale, ce qui limite une dissipation au niveau du point mort bas d'énergie cinétique liée au mouvement du centre de gravité d'un utilisateur selon l'axe vertical 51, et implique qu'à cette position le bras de levier de cette pédale par rapport à l'arbre moteur est lui aussi minimal.

L'arbre moteur 2 est libre de tourner par rapport au châssis. Donc, quelle que soit l'orientation du châssis dans le plan formé par l'axe horizontal 1 et vertical 51, c'est le poids de l'utilisateur qui maintient l'orientation de chaque pédale, et ce quelle que soit sa position sur sa trajectoire circulaire.

On peut imaginer des variations autour de ce premier mode de réalisation. Ainsi, on pourrait le modifier en désolidarisant les bielles des pédales. L'orientation de la bielle respectivement droite ou gauche peut alors être maintenue fixe par rapport à l'orientation du châssis où de la pédale respectivement droite ou gauche par un dispositif approprié, de manière préférentielle deux tiges articulées formant avec la manivelle de guidage respectivement droite ou gauche, et une pièce du châssis, un parallélogramme déformable.

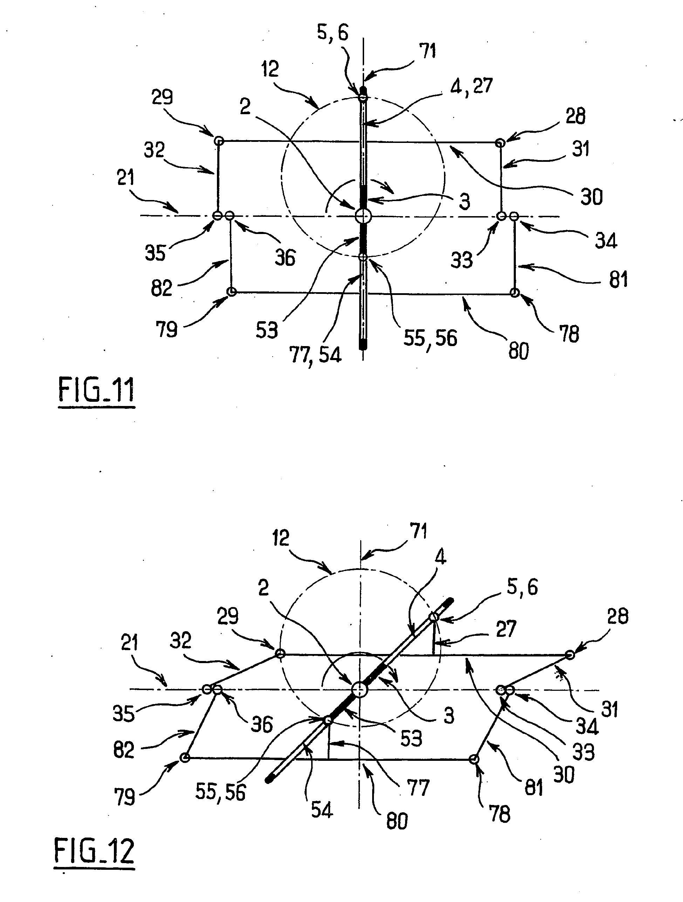

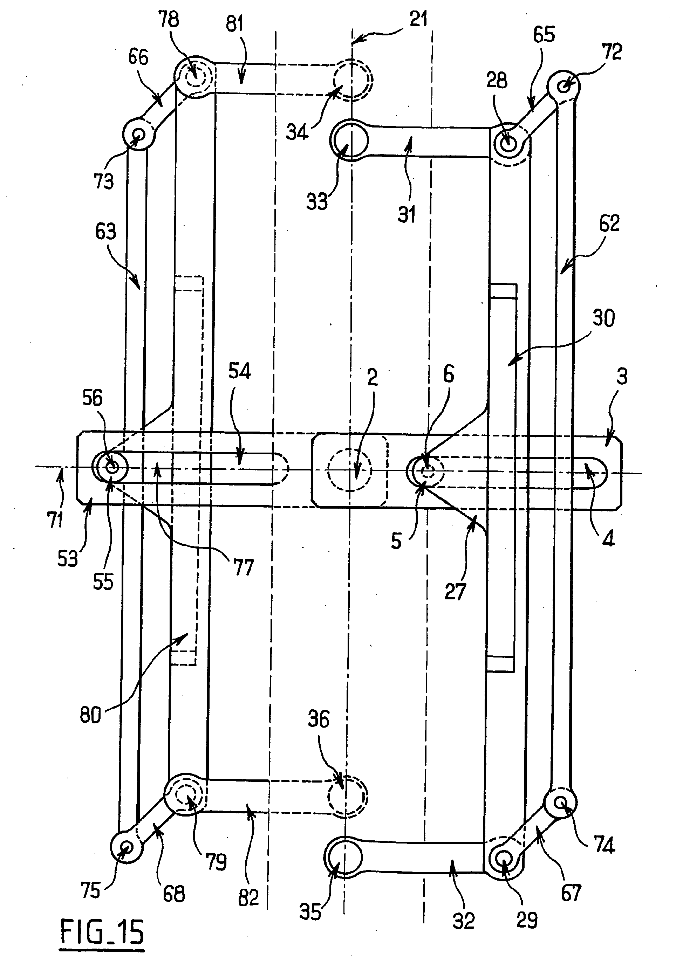

On va maintenant décrire, en référence aux figures 11, 12, 13, 14 et 15 un deuxième mode de réalisation d'un dispositif selon l'invention. Les figures 11, 12, 13 et 14 illustrent des vues schématiques de profil de quatre états successifs de ce dispositif en rotation. La figure 15 illustre une vue de profil du deuxième mode de réalisation d'un dispositif selon l'invention. Ce deuxième mode appartient à la fois à la première et à la deuxième famille de modes décrites précédemment. Dans ce deuxième mode de réalisation, le dispositif comprend un arbre moteur 2, un châssis, une manivelle motrice droite 3 et gauche 53, une rainure longitudinale droite 4 et gauche 54, un galet droit 5 et gauche 55, et un pivot de transmission droit 6 et gauche 56 identiques au mode de réalisation précédemment décrit. Un premier axe 21 définit l'horizontale et un deuxième axe 71 définit la verticale. Pour ce mode de réalisation, on définit l'horizontale comme la direction parallèle aux pédales dont l'orientation (c'est-à-dire l'orientation du plan selon lequel un pied d'un utilisateur repose sur la pédale) est maintenue fixe par rapport au châssis, la verticale n'étant pas alors nécessairement parallèle à la force de pesanteur. L'axe du pivot de transmission respectivement droit 6 ou gauche 56 est solidaire d'une bielle respectivement droite 27 ou gauche 77 sensiblement perpendiculaire à l'arbre moteur. Les bielles 27 et 77 peuvent avoir une forme de triangle dont la base est orientée vers le bas. La bielle respectivement droite ou gauche est solidaire d'une pédale respectivement droite 30 ou gauche 80, et la pédale respectivement droite 30 ou gauche 80 est libre de tourner autour des axes d'un premier pivot de pédale respectivement droit 28 ou gauche 78 et autour des axes d'un second pivot de pédale respectivement droit 29 ou gauche 79. Les axes des pivots de pédale 28, 29, 78, 79 sont sensiblement parallèles à l'arbre moteur. Une première manivelle de guidage respectivement droite 31 ou gauche 81 est libre de tourner autour d'un premier pivot de châssis respectivement droit 33 ou gauche 34, et est solidaire de l'axe du premier pivot de pédale respectivement droit 28 ou gauche 78. Une deuxième manivelle de guidage respectivement droite 32 ou gauche 82 est libre de tourner autour d'un deuxième pivot de châssis respectivement droit 35 ou gauche 36, et est solidaire de l'axe du deuxième pivot de pédale respectivement droit 29 ou gauche 79. Quelle que soit l'orientation du châssis par rapport à la direction du poids d'un utilisateur, les pédales sont maintenues fixes par rapport à l'orientation du châssis par les manivelles de guidage.

Le rôle des manivelles motrices, des manivelles de guidage, des bielles, et des rainures longitudinales sont les mêmes que dans le premier mode de réalisation décrit précédemment.

Les quatre états successifs du dispositif représentés sur les figures 11, puis 12, puis 13 et enfin 14 se succèdent lorsque l'arbre moteur 2 fait un quart de tour dans le sens des aiguilles d'une montre entre chaque figure. Il existe deux, et seulement deux, positions diamétralement opposées pour lesquelles les manivelles motrices droite et gauche sont parallèles aux manivelles de guidage. Une de ces positions est illustrée sur la figure 11.

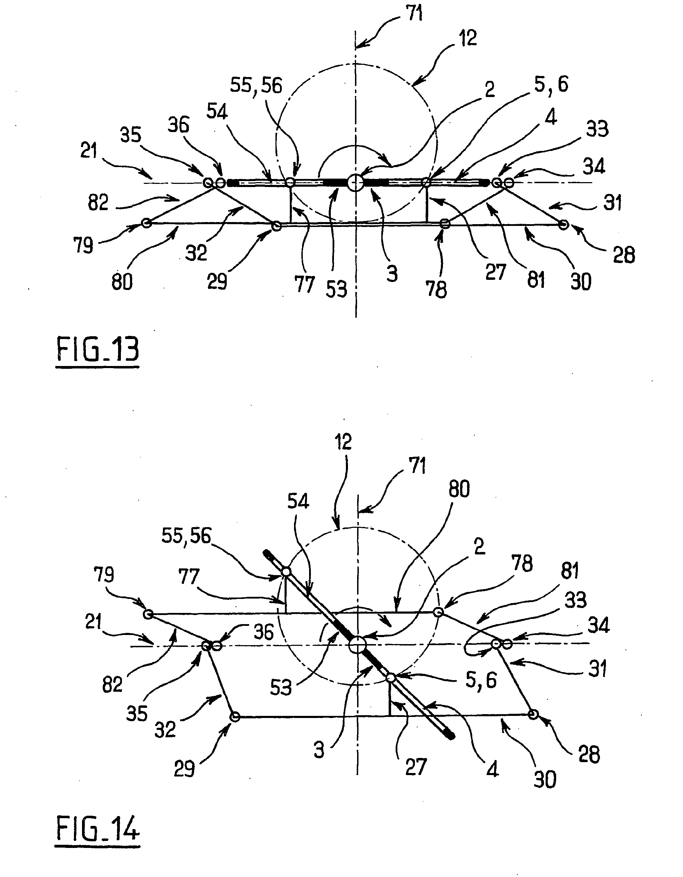

Les pivots de châssis 33, 34, 35 et 36 sont sensiblement alignés avec l'arbre moteur selon l'axe horizontal 21. On définit une hauteur pour chaque pédale selon l'axe vertical 71. Lors de la rotation de l'arbre moteur, la pédale droite et la pédale gauche décrivent sensiblement comme même courbe 12 un cercle. Une position du pivot de transmission droit sur le cercle 12 correspond à une unique position du pivot de transmission gauche sur le cercle 12. L'angle entre un segment reliant le pivot de transmission droit au centre du cercle 12 et un segment reliant le pivot de transmission gauche au centre du cercle 12 varie au cours du mouvement des pédales, et passe par un minimum lorsque les pédales sont sensiblement à la même hauteur: ce cas de figure est illustrée sur la figure 13. Comme dans le premier mode de réalisation, cette variation d'angle permet la réduction de l'amplitude d'oscillation du centre de gravité d'un utilisateur en position debout sur ce deuxième mode de réalisation d'un dispositif de pédalage selon l'invention par rapport à un pédalier classique. Ainsi, le mouvement des jambes de l'utilisateur se rapproche de celui de la marche ou la course à pied.

En passant des figures 11, à 12, puis 13 et enfin 14, on remarque que:

- l'arbre moteur 2 fait un quart de tour dans le sens des aiguilles d'une montre entre chaque figure,
- la pédale droite 30 a une vitesse angulaire qui diminue entre chaque figure, la pédale droite allant sur ces quatre figures de haut en bas, et
- la pédale gauche 80 a une vitesse angulaire qui augmente entre chaque figure, la pédale gauche allant sur ces quatre figures de bas en haut.

Une première pédale située plus haut qu'une deuxième pédale a une vitesse plus grande que ladite deuxième pédale. La vitesse d'une pédale à une position de hauteur maximale est maximale, ce qui limite l'effet du point mort haut, et implique qu'à cette position le bras de levier de cette pédale par rapport à l'arbre moteur est lui aussi maximal. La vitesse d'une pédale à une position de hauteur minimale est minimale, ce qui limite une dissipation au niveau du point mort bas d'énergie cinétique liée au mouvement du centre de gravité d'un utilisateur, et implique qu'à cette position le bras de levier de cette pédale par rapport à l'arbre moteur est lui aussi minimal.

Pour le deuxième mode de réalisation, le parallélogramme déformable constitué des deux manivelles de guidage droites 31 et 32, des deux pivots de châssis droits 33 et 35, des deux pivots de pédales droits 28 et 29 et de la pédale droite 30 possède des positions instables, comme tout parallélogramme déformable, correspondant aux cas où les pivots de châssis droits et les pivots de pédales droits sont alignés. Il en va de même pour le côté gauche. La figure 15 est plus détaillée que les figures schématiques 11, 12, 13 et 14 en ce qu'elle illustre en outre des moyens pour stabiliser les manivelles de guidage.

Les moyens pour stabiliser les manivelles de guidage comprennent une première et une deuxième bielle de stabilisation droite 65 et 67, un premier et un deuxième pivot de stabilisation droit 72 et 74, une bielle de lien droite 62, une première et une deuxième bielle de stabilisation gauche 66 et 68, un premier et un deuxième pivot de stabilisation gauche 73 et 75, et une bielle de lien gauche 63.

La première bielle de stabilisation respectivement droite 65 ou gauche 66 est solidaire de l'axe du premier pivot de pédale respectivement droit 28 ou gauche 78 et est solidaire d'un premier pivot de stabilisation respectivement droit 72 ou gauche 73 dont l'axe est sensiblement parallèle à l'arbre moteur 2. La deuxième bielle de stabilisation respectivement droite 67 ou gauche 68 est solidaire du deuxième pivot de pédale respectivement droit 29 ou gauche 79 et est solidaire d'un deuxième pivot de stabilisation respectivement droit 74 ou gauche 75 dont l'axe est sensiblement parallèle à l'arbre moteur 2. La bielle de lien respectivement droit ou gauche tourne autour du premier et du deuxième pivot de stabilisation respectivement droit 72, 74 ou gauche 73, 75. Ainsi, le dispositif de stabilisation forme deux parallélogrammes déformables qui stabilisent toutes les manivelles de guidage.

Bien sûr, l'invention n'est pas limitée aux exemples qui viennent d'être décrits et de nombreux aménagements peuvent être apportés à ces exemples sans sortir du cadre de l'invention. En particulier, on peut imaginer de nombreuses variations quant à la manière de faire varier la distance entre les axes des pivots de transmission et l'arbre moteur d'un pédalier selon l'invention. Il a été donné dans la description qui précède l'exemple de manivelles motrices qui comportent une glissière ou une rainure longitudinale à l'intérieur de laquelle glisse un pivot de transmission. On aurait pu aussi imaginer le cas où chaque manivelle motrice est constituée de deux pièces coulissant l'une dans l'autre de sorte que la longueur effective de ces manivelles motrices varie, de sorte que la distance entre les axes des pivots de transmission et l'arbre moteur varie. Enfin, dans les exemples précédemment décrits, une pédale atteint son point mort haut lorsque l'autre pédale atteint simultanément son point mort bas. Dans d'autres modes de réalisation, le point mort haut d'une pédale peut ne correspondre que sensiblement au point mort bas de l'autre pédale à quelque degrés près, ce qui a pour effet de faciliter pour un utilisateur le passage de ces points morts.

## Revendications

1. Procédé de pédalage pour provoquer la rotation d'un arbre moteur (2) au moyen de deux pédales (10, 30, 60, 80) actionnées avec un déphasage temporel (43) entre elles suivant des trajectoires courbes fermées respectives (12, 40, 41, 42) ayant une partie haute et une partie basse de part et d'autre d'un plan où les pédales sont à égale hauteur, **caractérisé en ce qu'**on transmet le mouvement des pédales à l'arbre par l'intermédiaire d'un mécanisme de transmission qui définit pour chaque pédale une plus grande vitesse moyenne dans la partie haute que dans la partie basse, de façon que le plan d'égale hauteur des pédales soit en dessous du milieu de la hauteur des trajectoires fermées.

2. Procédé selon la revendication 1, **caractérisé en ce que** les trajectoires courbes fermées (12, 40, 41, 42) ont des dimensions horizontales et verticales sensiblement égales.

3. Procédé selon l'une des revendications précédentes, **caractérisé en ce que**, pour une vitesse de rotation de l'arbre moteur (2) autour de son axe (9) constante, les vitesses (45, 46) des pédales sont périodiques de période (44) sensiblement égale au double du déphasage temporel (43).

4. Procédé selon l'une des revendications précédentes, **caractérisé en ce que**, pour une vitesse de rotation de l'arbre moteur (2) autour de son axe (9) constante, la vitesse (45, 46) de chaque pédale est maximale dans la partie haute et minimale dans la partie basse, et **en ce que** le rapport entre la vitesse maximale et la vitesse minimale de chaque pédale est sensiblement compris entre deux et trois.

5. Procédé selon l'une des revendications précédentes, **caractérisé en ce que**, pour une vitesse de rotation de l'arbre moteur (2) autour de son axe (9) constante, la vitesse de chaque pédale est sensiblement maximale à la, position la plus haute de sa trajectoire et sensiblement minimale à la position la plus basse de sa trajectoire.

6. Procédé selon l'une des revendications précédentes, **caractérisé en ce que** les vitesses (45, 46) des pédales sont sensiblement égales lorsqu'elles sont dans le plan d'égale hauteur.

7. Procédé selon l'une des revendications précédentes, **caractérisé en ce qu'**il comprend en outre une utilisation par un utilisateur en position debout sur les pédales.

8. Dispositif de pédalage mettant en oeuvre le procédé selon l'une des revendications 1 à 7, comprenant:

   - des moyens de couplage pour coupler une rotation d'un arbre moteur (2) autour de son axe (9) aux mouvements déphasés temporellement d'une pédale droite (10, 30) et d'une pédale gauche (60, 80), et
   - des moyens de guidage pour limiter le mouvement de chaque pédale à une trajectoire courbe fermée (12, 40, 41, 42) ayant une partie haute et une partie basse de part et d'autre d'un plan où les pédales sont à égale hauteur,

   **caractérisé en ce que** les moyens de couplage et les moyens de guidage appartiennent à un mécanisme de transmission qui définit pour chaque pédale une plus grande vitesse moyenne dans la partie haute que dans la partie basse, de façon que le plan d'égale hauteur des pédales soit en dessous du milieu de la hauteur des trajectoires fermées.

9. Dispositif selon la revendication 8, **caractérisé en ce que** le mécanisme de transmission est adapté pour égaliser sensiblement les vitesses (45, 46) des pédales (10, 30, 60, 80) lorsqu'elles sont dans le plan d'égale hauteur.

10. Dispositif de pédalage selon la revendication 8 ou 9, **caractérisé en ce que** l'arbre moteur (2) traverse un châssis et **en ce que** le mécanisme de transmission comprend pour chaque pédale (10, 60):

- une manivelle de guidage (11, 61), articulée au châssis et désolidarisée de l'arbre moteur, et
- un pivot de pédale (8, 58) reliant la pédale à la manivelle de guidage.

**11.** Dispositif de pédalage selon la revendication 8 ou 9, **caractérisé en ce que** le mécanisme de transmission comprend pour chaque pédale:

- une manivelle motrice (3, 53), solidaire de l'arbre moteur (2),
- un pivot de transmission (6, 56) reliant la pédale à la manivelle motrice, et
- des moyens (4, 5, 54, 55) de variation de la distance entre l'axe dudit pivot de transmission (6, 56) et l'axe de l'arbre moteur (2) au cours de la rotation de l'arbre.

**12.** Dispositif de pédalage selon la revendication 11, **caractérisé en ce que** l'arbre moteur traverse un châssis et **en ce que** le mécanisme de transmission comprend en outre pour chaque pédale:

- une manivelle de guidage (11, 61), articulée au châssis et désolidarisée de l'arbre moteur, et
- un pivot de pédale (8, 58) reliant la pédale (10, 60) à la manivelle de guidage, et
- une bielle (7, 57) portant le pivot de pédale (8, 58) et le pivot de transmission (6, 56).

**13.** Dispositif de pédalage selon la revendication 12, **caractérisé en ce que** la pédale (10, 60) est solidaire de la bielle (7, 57).

**14.** Dispositif de pédalage selon la revendication 12 ou 13, **caractérisé en ce que** chaque manivelle de guidage (11, 61) est articulée au châssis par un pivot de châssis (14, 64) sensiblement coaxial avec l'arbre moteur (2).

**15.** Dispositif de pédalage selon la revendication 14, **caractérisé en ce que** pour chaque pédale (10, 60) la distance entre l'axe du pivot de pédale (8, 58) et l'axe du pivot de transmission (6, 56) est sensiblement égale à la moitié de la distance entre l'axe du pivot de châssis (14, 64) et l'axe du pivot de pédale (8, 58).

**16.** Dispositif de pédalage selon la revendication 11, **caractérisé en ce que** l'arbre moteur (2) traverse un châssis et **en ce que** le mécanisme de transmission comprend en outre pour chaque pédale (30, 80):

- deux manivelles de guidage (31, 32, 81, 82), articulées chacune au châssis par un pivot de châssis (33, 34, 35, 36) et désolidarisées de l'arbre moteur, et

- deux pivots de pédale (28, 29, 78, 79) reliant chacun la pédale (30, 80) à une des deux manivelles de guidage, et
- une bielle (27, 77) portant le pivot de transmission (6, 56) et solidaire de la pédale.

**17.** Dispositif de pédalage selon la revendication 16, **caractérisé en ce qu'**il comprend en outre des moyens (65, 66, 67, 68, 62, 63, 72, 73, 74, 75) pour stabiliser les manivelles de guidage (31, 32, 81, 82).

**18.** Dispositif de pédalage selon l'une des revendications 14 à 17, **caractérisé en ce que** pour chaque pédale (10, 30, 60, 80) la distance minimale entre l'axe du pivot de transmission (6, 56) et l'axe de l'arbre moteur (2) est sensiblement égale à la moitié de la distance entre l'axe du pivot de châssis (14, 64, 33, 34, 35, 36) et l'axe du pivot de pédale (8, 58, 28, 29, 78, 79) reliés par une des manivelles de guidage (11, 61, 31, 32, 81, 82).

**19.** Dispositif de pédalage selon l'une des revendications 14 à 18, **caractérisé en ce que** pour chaque pédale (10, 30, 60, 80) la distance maximale entre l'axe du pivot de transmission (6, 56) et l'axe de l'arbre moteur (2) est sensiblement égale à 1,5 fois la distance entre l'axe du pivot de châssis (14, 64, 33, 34, 35, 36) et l'axe du pivot de pédale (8, 58, 28, 29, 78, 79) reliés par .une des manivelles de guidage (11, 61, 31, 32, 81, 82).

**20.** Dispositif de pédalage selon l'une des revendications 11 à 19, **caractérisé en ce que** les moyens de variation de distance comprennent pour chaque pédale:

- une rainure (4, 54) le long de la manivelle motrice (3, 53), et
- un galet (5, 55) libre de se déplacer en roulant dans la rainure, et relié au pivot de transmission (6, 56).

**21.** Dispositif de pédalage selon la revendication 20, **caractérisé en ce que** pour chaque pédale la rainure est de largeur sensiblement supérieure au diamètre du galet.

**22.** Dispositif de pédalage selon l'une des revendications 11 à 19, **caractérisé en ce que** les moyens de variation de distance comprennent des moyens pour faire varier la longueur effective des manivelles motrices.

**23.** Dispositif de pédalage selon la revendication 8 ou 9, **caractérisé en ce que** le mécanisme de transmission comprend:

- un arbre secondaire ayant un axe (15) sensiblement parallèle à l'arbre moteur,
- des moyens de couplage d'une rotation de l'arbre moteur autour de son axe à une rotation de l'axe (15) de l'arbre secondaire autour de l'axe (9) de l'arbre moteur et à une rotation de l'arbre secondaire autour de son axe (15),
et **en ce que** le mécanisme de transmission comprend en outre pour chaque pédale:
- une manivelle secondaire (16, 17), solidaire de l'arbre secondaire, et
- un pivot de pédale (8, 58) reliant la pédale à la manivelle secondaire.

24. Dispositif de pédalage selon la revendication 23, **caractérisé en ce que**:

    - les moyens de couplage sont agencés de sorte que l'axe (15) de l'arbre secondaire est libre en rotation autour de l'axe (9) de l'arbre moteur à une vitesse angulaire sensiblement double de la vitesse angulaire de rotation de l'arbre secondaire autour de son axe (15), et
    - les manivelles secondaires (16, 17) sont sensiblement quatre fois plus longues que le rayon de rotation de l'axe (15) de l'arbre secondaire autour de l'axe (9) de l'arbre moteur.

25. Dispositif de pédalage selon la revendication 8 ou 9, **caractérisé en ce que** le mécanisme de transmission comprend pour chaque pédale:

    - une première manivelle (18, 19), solidaire de l'arbre moteur,
    - une seconde manivelle (22, 23) reliée à la première manivelle par un pivot secondaire (24, 25), et
    - un pivot de pédale (8, 58) reliant la pédale à la seconde manivelle.

26. Dispositif de pédalage selon la revendication 25, **caractérisé en ce que** pour chaque pédale:

    - l'arbre moteur (2) et les première (18, 19) et seconde (22, 23) manivelles sont couplés de sorte que la seconde manivelle (22, 23) est libre en rotation autour de l'axe du pivot secondaire (24, 25) à une vitesse angulaire sensiblement double de la vitesse angulaire de rotation de l'axe du pivot secondaire (24, 25) autour de l'axe (9) de l'arbre moteur, et
    - la première manivelle (18, 19) est sensiblement quatre fois plus longue que la seconde manivelle (22, 23)..

27. Dispositif de pédalage selon l'une des revendications 8 à 26,
    **caractérisé en ce qu'**il comprend en outre des moyens de transmission d'une puissance motrice de l'arbre moteur à un dispositif de consommation de cette puissance.

28. Dispositif de pédalage selon l'une des revendications 8 à 27,
    **caractérisé en ce qu'**il est intégré à un véhicule ou un appareil d'entraînement sportif statique.

**Claims**

1. Pedalling method for causing a drive shaft (2) to rotate by means of two pedals (10, 30, 60, 80) operated with a time delay (43) between them along respective closed curved trajectories (12, 40, 41, 42) having a top part and a bottom part on either side of a plane where the pedals are at equal height, **characterized in that** the movement of the pedals is transmitted to the shaft by means of a transmission mechanism which defines for each pedal a higher average speed in the top part than in the bottom part, such that the plane of equal height of the pedals is below the mid-height of the closed trajectories.

2. Method according to claim 1, **characterized in that** the closed curved trajectories (12, 40, 41, 42) have approximately equal horizontal and vertical dimensions.

3. Method according to one of the previous claims, **characterized in that**, for a constant speed of rotation of the drive shaft (2) about its axis (9), the speeds (45, 46) of the pedals are periodic and have a period (44) approximately equal to the double of the time delay (43).

4. Method according to one of the previous claims, **characterized in that**, for a constant speed of rotation of the drive shaft (2) about its axis (9), the speed (45, 46) of each pedal is maximum at the top part and minimum at the bottom part, and **in that** the ratio of the maximum speed to the minimum speed of each pedal is comprised between approximately two and three.

5. Method according to one of the previous claims, **characterized in that**, for a constant speed of rotation of the drive shaft (2) about its axis (9), the speed of each pedal is substantially maximum at the highest position of its trajectory and substantially minimum at the lowest position of its trajectory.

6. Method according to one of the previous claims, **characterized in that** the speeds (45, 46) of the pedals are approximately equal when they are in the plane of equal height.

7. Method according to one of the previous claims, **characterized in that** it also comprises a use by a user in the standing position on the pedals.

8. Pedalling device implementing the method according to one of claims 1 to 7, comprising:

- coupling means for coupling a rotation of a drive shaft (2) about its axis (9) to the time-shifted movements of a right pedal (10, 30) and left pedal (60, 80), and
- guide means for limiting the movement of each pedal to a closed curved trajectory (12, 40, 41, 42) having a top part and a bottom part on either side of a plane where the pedals are at equal height, **characterized in that** the coupling means and the guide means form part of a transmission mechanism which defines for each pedal a greater average speed in the top part than in the bottom part, such that the plane of equal height is below the mid-height of the closed trajectories.

9. Device according to claim 8, **characterized in that** the transmission mechanism is suited to substantially equalizing the speeds (45, 46) of the pedals (10, 30, 60, 80) when they are in the plane of equal height.

10. Pedalling device according to claim 8 or 9, **characterized in that** the drive shaft (2) passes through a frame and **in that** the transmission mechanism comprises for each pedal (10, 60):

- a guide crank (11, 61), articulated to the frame and not integral with the drive shaft, and
- a pedal pivot (8, 58) connecting the pedal to the guide crank.

11. Pedalling device according to claim 8 or 9, **characterized in that** the transmission mechanism comprises for each pedal:

- a driving crank (3, 53), integral with the drive shaft (2),
- a transmission pivot (6, 56) connecting the pedal to the driving crank, and
- means (4, 5, 54, 55) for varying the distance between the axis of said transmission pivot (6, 56) and the axis of the drive shaft (2) during the rotation of the shaft.

12. Pedalling device according to claim 11, **characterized in that** the drive shaft passes through a frame and **in that** the transmission mechanism also comprises for each pedal:

- a guide crank (11, 61), articulated to the frame and not integral with the drive shaft, and

- a pedal pivot (8, 58) connecting the pedal (10, 60) to the guide crank, and
- a connecting rod (7, 57) carrying the pedal pivot (8, 58) and the transmission pivot (6, 56).

13. Pedalling device according to claim 12, **characterized in that** the pedal (10, 60) is integral with the connecting rod (7, 57).

14. Pedalling device according to claim 12 or 13, **characterized in that** each guide crank (11, 61) is articulated to the frame by a frame pivot (14, 64) substantially coaxial with the drive shaft (2).

15. Pedalling device according to claim 14, **characterized in that** for each pedal (10, 60) the distance between the axis of the pedal pivot (8, 58) and the axis of the transmission pivot (6, 56) is approximately equal to half the distance between the axis of the frame pivot (14, 64) and the axis of the pedal pivot (8, 58).

16. Pedalling device according to claim 11, **characterized in that** the drive shaft (2) passes through a frame and **in that** the transmission mechanism also comprises for each pedal (30, 80):

- two guide cranks (31, 32, 81, 82), each articulated to the frame by a frame pivot (33, 34, 35, 36) and separate from the drive shaft, and
- two pedal pivots (28, 29, 78, 79) each connecting the pedal (30, 80) to one of the two guide cranks, and
- a connecting rod (27, 77) carrying the transmission pivot (6, 56) and integral with the pedal.

17. Pedalling device according to claim 16, **characterized in that** it also comprises means (65, 66, 67, 68, 62, 63, 72, 73, 74, 75) for stabilizing the guide cranks (31, 32, 81, 82).

18. Pedalling device according to one of claims 14 to 17, **characterized in that** for each pedal (10, 30, 60, 80) the minimum distance between the axis of the transmission pivot (6, 56) and the axis of the drive shaft (2) is approximately equal to half the distance between the axis of the frame pivot (14, 64, 33, 34, 35, 36) and the axis of the pedal pivot (8, 58, 28, 29, 78, 79) connected by one of the guide cranks (11, 61, 31, 32, 81, 82).

19. Pedalling device according to one of claims 14 to 18, **characterized in that** for each pedal (10, 30, 60, 80) the maximum distance between the axis of the transmission pivot (6, 56) and the axis of the drive shaft (2) is approximately equal to 1.5 times the distance between the axis of the frame pivot (14, 64, 33, 34, 35, 36) and the axis of the pedal pivot (8, 58, 28, 29, 78, 79) connected by one of the guide cranks (11, 61, 31, 32, 81, 82).

20. Pedalling device according to one of claims 11 to 19, **characterized in that** the means for varying the distance include for each pedal:

 - a groove (4, 54) along the driving crank (3, 53), and
 - a roller (5, 55) free to move by rolling in the groove, and connected to the transmission pivot (6, 56).

21. Pedalling device according to claim 20, **characterized in that** for each pedal the width of the groove is substantially greater than the diameter of the roller.

22. Pedalling device according to one of claims 11 to 19, **characterized in that** the means for varying the distance include means for varying the effective length of the driving cranks.

23. Pedalling device according to claim 8 or 9, **characterized in that** the transmission mechanism comprises:

 - a secondary shaft having an axis (15) substantially parallel to the drive shaft,
 - means for coupling a rotation of the drive shaft about its axis to a rotation of the axis (15) of the secondary shaft about the axis (9) of the drive shaft and to a rotation of the secondary shaft about its axis (15),
 and **in that** the transmission mechanism also comprises for each pedal:
 - a secondary crank (16, 17), integral with the secondary shaft, and
 - a pedal pivot (8, 58) connecting the pedal to the secondary crank.

24. Pedalling device according to claim 23, **characterized in that**:

 - the coupling means are arranged such that the axis (15) of the secondary shaft rotates freely about the axis (9) of the drive shaft at an angular speed substantially equal to the double of the angular speed of rotation of the secondary shaft about its axis (15), and
 - the secondary cranks (16, 17) are substantially four times longer than the radius of rotation of the axis (15) of the secondary shaft about the axis (9) of the drive shaft.

25. Pedalling device according to claim 8 or 9, **characterized in that** the transmission mechanism comprises for each pedal:

 - a first crank (18, 19), integral with the drive shaft,
 - a second crank (22, 23) connected to the first crank by a secondary pivot (24, 25), and
 - a pedal pivot (8, 58) connecting the pedal to the second crank.

26. Pedalling device according to claim 25, **characterized in that** for each pedal:

 - the drive shaft (2) and the first (18, 19) and second (22, 23) cranks are coupled such that the second crank (22, 23) rotates freely about the axis of the secondary pivot (24, 25) at an angular speed approximately equal to the double of the angular speed of rotation of the axis of the secondary pivot (24, 25) about the axis (9) of the drive shaft, and
 - the first crank (18, 19) is approximately four times longer than the second crank (22, 23).

27. Pedalling device according to one of claims 8 to 26, **characterized in that** it also comprises means of transmission of a driving power from the drive shaft to a device consuming this power.

28. Pedalling device according to one of claims 8 to 27, **characterized in that** it is integrated with a vehicle or a static sports training device.

**Patentansprüche**

1. Pedalverfahren, um das Drehen einer Antriebswelle (2) mittels zweier Pedale (10, 30, 60, 80) zu verursachen, die mit einer zeitlichen Phasenverschiebung (43) untereinander entlang jeweiliger geschlossener gebogener Bahnen (12, 40, 41, 42) betätigt werden, die einen oberen Teil und einen unteren Teil zu beiden Seiten einer Ebene haben, in der die Pedale auf gleicher Höhe sind, **dadurch gekennzeichnet, dass** man die Bewegung der Pedale auf die Welle über einen Übertragungsmechanismus überträgt, der für jedes Pedal eine größere mittlere Geschwindigkeit im oberen Teil als im unteren Teil definiert, so dass sich die Ebene mit gleicher Höhe der Pedale unterhalb der Mitte der Höhe der geschlossenen Bahnen befindet.

2. Verfahren nach Anspruch 1, **dadurch gekennzeichnet, dass** die geschlossenen gebogenen Bahnen (12, 40, 41, 42) in etwa gleiche horizontale und vertikale Maße haben.

3. Verfahren nach einem der vorhergehenden Ansprüche, **dadurch gekennzeichnet, dass** die Geschwindigkeiten (45, 46) der Pedale bei einer konstanten Drehzahl der Antriebswelle (2) um ihre Achse (9) mit einer Periode (44) im Wesentlichen gleich dem Doppelten der zeitlichen Phasenverschiebung (43) periodisch sind.

4. Verfahren nach einem der vorhergehenden Ansprüche, **dadurch gekennzeichnet, dass** die Geschwindigkeit (45, 46) jedes Pedals bei einer konstanten Drehzahl der Antriebswelle (2) um ihre Achse (9) in dem oberen Teil maximal und in dem unteren Teil minimal ist, und dass das Verhältnis zwischen der maximalen Geschwindigkeit und der minimalen Geschwindigkeit jedes Pedals im Wesentlichen zwischen zwei und drei liegt.

5. Verfahren nach einem der vorhergehenden Ansprüche, **dadurch gekennzeichnet, dass** die Geschwindigkeit jedes Pedals bei einer konstanten Drehzahl der Antriebswelle (2) um ihre Achse (9) in der höchsten Position seiner Bahn im Wesentlichen maximal und in der tiefsten Position seiner Bahn im Wesentlichen minimal ist.

6. Verfahren nach einem der vorhergehenden Ansprüche, **dadurch gekennzeichnet, dass** die Geschwindigkeiten (45, 46) der Pedale im Wesentlichen gleich sind, wenn sie in der Ebene gleicher Höhe sind.

7. Verfahren nach einem der vorhergehenden Ansprüche, **dadurch gekennzeichnet, dass** es ferner einen Gebrauch durch einen Benutzer in stehender Position auf den Pedalen aufweist.

8. Pedalvorrichtung, die das Verfahren nach einem der Ansprüche 1 bis 7 umsetzt, die Folgendes aufweist:

   - Koppelmittel zum Koppeln einer Drehung einer Antriebswelle (2) um ihre Achse (9) mit den zeitlich phasenverschobenen Bewegungen eines rechten Pedals (10, 30) und eines linken Pedals (60, 80), und
   - Führungsittel, um die Bewegung jedes Pedals auf eine geschlossene gebogene Bahn (12, 40, 41, 42) zu beschränken, die einen oberen und einen unteren Teil zu beiden Seiten einer Ebene, in der die Pedale in gleicher Höhe sind, hat,

   **dadurch gekennzeichnet, dass** die Koppelmittel und die Führungsmittel zu einem Übertragungsmechanismus gehören, der für jedes Pedal eine größere mittlere Geschwindigkeit in dem oberen Teil als in dem unteren Teil derart definiert, dass die Ebene mit gleicher Höhe der Pedale unterhalb der Mitte der Höhe der geschlossenen Bahnen liegt.

9. Vorrichtung nach Anspruch 8, **dadurch gekennzeichnet, dass** der Übertragungsmechanismus im Wesentlichen die Geschwindigkeiten (45, 46) der Pedale (10, 30, 60, 80) ausgleichen kann, wenn sie sich in der Ebene gleicher Höhe befinden.

10. Pedalvorrichtung nach Anspruch 8 oder 9, **dadurch gekennzeichnet, dass** die Antriebswelle (2) ein Chassis durchquert, und dass der Übertragungsmechanismus für jedes Pedal (10, 60) Folgendes aufweist:

    - eine Führungskurbel (11, 61), die an dem Chassis angelenkt und von der Antriebswelle getrennt ist, und
    - einen Pedalzapfen (8, 58), der das Pedal mit der Führungskurbel verbindet.

11. Pedalvorrichtung nach Anspruch 8 oder 9, **dadurch gekennzeichnet, dass** der Übertragungsmechanismus für jedes Pedal Folgendes aufweist:

    - eine Antriebskurbel (3, 53), die fest mit der Antriebswelle (2) verbunden ist,
    - einen Übertragungszapfen (6, 56), der das Pedal mit der Antriebskurbel verbindet, und
    - Mittel (4, 5, 54, 55) zum Variieren der Entfernung zwischen der Achse des Übertragungszapfens (6, 56) und der Achse der Antriebswelle (2) im Laufe der Drehung der Welle.

12. Pedalvorrichtung nach Anspruch 11, **dadurch gekennzeichnet, dass** die Antriebswelle ein Chassis durchquert, und dass der Übertragungsmechanismus ferner für jedes Pedal Folgendes aufweist:

    - eine Führungskurbel (11, 61), die an dem Chassis angelenkt und von der Antriebswelle getrennt ist, und
    - einen Pedalzapfen (8, 58), der das Pedal (10, 60) mit der Führungskurbel verbindet, und
    - ein Pleuel (7, 57), das den Pedalzapfen (8, 58) und den Übertragungszapfen (6, 56) trägt.

13. Pedalvorrichtung nach Anspruch 12, **dadurch gekennzeichnet, dass** das Pedal (10, 60) fest mit dem Pleuel (7, 57) verbunden ist.

14. Pedalvorrichtung nach Anspruch 12 oder 13, **dadurch gekennzeichnet, dass** jede Führungskurbel (11, 61) an dem Chassis mit einem Chassiszapfen (14, 64), der im Wesentlichen zu der Antriebswelle (2) koaxial ist, angelenkt ist.

15. Pedalvorrichtung nach Anspruch 14, **dadurch gekennzeichnet, dass** für jedes Pedal (10, 60) die Entfernung zwischen der Achse des Pedalzapfens (8, 58) und der Achse des Übertragungszapfens (6, 56) im Wesentlichen die Hälfte der Entfernung zwischen der Achse des Chassiszapfens (14, 64) und der Achse des Pedalzapfens (8, 58) beträgt.

**16.** Pedalvorrichtung nach Anspruch 11, **dadurch gekennzeichnet, dass** die Antriebswelle (2) ein Chassis durchquert, und dass der Übertragungsmechanismus ferner für jedes Pedal (30, 80) Folgendes aufweist:

- zwei Führungskurbeln (31, 32, 81, 82), die jeweils an dem Chassis mit einem Chassiszapfen (33, 34, 35, 36) angelenkt und von der Antriebswelle getrennt sind, und
- zwei Pedalzapfen (28, 29, 78, 79), die jeweils das Pedal (30, 80) mit einer der zwei Führungskurbeln verbinden, und
- ein Pleuel (27, 77), das den Übertragungszapfen (6, 56) trägt und fest mit dem Pedal verbunden ist.

**17.** Pedalvorrichtung nach Anspruch 16, **dadurch gekennzeichnet, dass** sie ferner Mittel (65, 66, 67, 68, 62, 63, 72, 73, 74, 75) zum Stabilisieren der Führungskurbeln (31, 32, 81, 82) aufweist.

**18.** Pedalvorrichtung nach einem der Ansprüche 14 bis 17, **dadurch gekennzeichnet, dass** die Mindestentfernung zwischen der Achse des Übertragungszapfens (6, 56) und der Achse der Antriebswelle (2) für jedes Pedal (10, 30, 60, 80) im Wesentlichen die Hälfte der Entfernung zwischen der Achse des Chassiszapfens (14, 64, 33, 34, 35, 36) und der Achse des Pedalzapfens (8, 58, 28, 29, 78, 79), die durch eine der Führungskurbeln (11, 61, 31, 32, 81, 82) verbunden sind, beträgt.

**19.** Pedalvorrichtung nach einem der Ansprüche 14 bis 18, **dadurch gekennzeichnet, dass** die maximale Entfernung zwischen der Achse des Übertragungszapfens (6, 56) und der Achse der Antriebswelle (2) für jedes Pedal (10, 30, 60, 80) im Wesentlichen das 1,5-fache der Entfernung zwischen der Achse des Chassiszapfens (14, 64, 33, 34, 35, 36) und der Achse des Pedalzapfens (8, 58, 28, 29, 78, 79), die durch eine der Führungskurbeln (11, 61, 31, 32, 81, 82) verbunden sind, beträgt.

**20.** Pedalvorrichtung nach einem der Ansprüche 11 bis 19, **dadurch gekennzeichnet, dass** die Mittel zum Variieren der Entfernung für jedes Pedal Folgendes aufweisen:

- eine Rille (4, 54) entlang der Antriebskurbel (3, 53) und
- eine Walze (5, 55), die sich frei bewegen kann, indem sie in der Rille rollt, und die mit dem Übertragungszapfen (6, 56) verbunden ist.

**21.** Pedalvorrichtung nach Anspruch 20, **dadurch gekennzeichnet, dass** die Rille für jedes Pedal eine Breite hat, die merklich größer ist als der Durchmesser der Walze.

**22.** Pedalvorrichtung nach einem der Ansprüche 11 bis 19, **dadurch gekennzeichnet, dass** die Mittel zum Variieren der Entfernung Mittel aufweisen, um die effektive Länge der Antriebskurbeln variieren zu lassen.

**23.** Pedalvorrichtung nach Anspruch 8 oder 9, **dadurch gekennzeichnet, dass** der Übertragungsmechanismus Folgendes aufweist:

- eine Sekundärwelle mit einer Achse (15) im Wesentlichen parallel zu der Antriebswelle,
- Mittel zum Koppeln einer Drehung der Antriebswelle um ihre Achse mit einer Drehung der Achse (15) der Sekundärwelle um die Achse (9) der Antriebswelle und einer Drehung der Sekundärwelle um ihre Achse (15), und dass der Übertragungsmechanismus ferner für jedes Pedal Folgendes aufweist:
- eine Sekundärkurbel (16, 17), die fest mit der Sekundärwelle verbunden ist, und
- einen Pedalzapfen (8, 58), der das Pedal mit der Sekundärkurbel verbindet.

**24.** Pedalvorrichtung nach Anspruch 23, **dadurch gekennzeichnet, dass**:

- die Koppelmittel derart eingerichtet sind, dass die Achse (15) der Sekundärwelle um die Achse (9) der Antriebswelle mit einer Winkelgeschwindigkeit, welche im Wesentlichen doppelt so groß ist wie die Winkelgeschwindigkeit der Drehung der Sekundärwelle um ihre Achse (15), freidrehend ist, und
- die Sekundärkurbeln (16, 17) im Wesentlichen vier Mal länger sind als der Drehradius der Achse (15) der Sekundärwelle um die Achse (9) der Antriebswelle.

**25.** Pedalvorrichtung nach Anspruch 8 oder 9, **dadurch gekennzeichnet, dass** der Übertragungsmechanismus für jedes Pedal Folgendes aufweist:

- eine erste Kurbel (18, 19), die fest mit der Antriebswelle verbunden ist,
- eine zweite Kurbel (22, 23), die mit der ersten Kurbel über einen Sekundärzapfen (24, 25) verbunden ist, und
- einen Pedalzapfen (8, 58), der das Pedal mit der zweiten Kurbel verbindet.

**26.** Pedalvorrichtung nach Anspruch 25, **dadurch gekennzeichnet, dass** für jedes Pedal:

- die Antriebswelle (2) und die erste (18, 19) und zweite (22, 23) Kurbel derart gekoppelt sind, dass die zweite Kurbel (22, 23) um die Achse des Sekundärzapfens (24, 25) mit einer Winkelgeschwindigkeit, welche im Wesentlichen doppelt so groß ist wie die Winkelgeschwindigkeit der Drehung der Achse des Sekundärzapfens (24, 25) um die Achse (9) der Antriebswelle, freidrehend ist und
- die erste Kurbel (18, 19) im Wesentlichen vier Mal länger ist als die zweite Kurbel (22, 23).

27. Pedalvorrichtung nach einem der Ansprüche 8 bis 26, **dadurch gekennzeichnet, dass** sie ferner Mittel zum Übertragen einer Antriebsleistung der Antriebswelle auf eine Vorrichtung zum Verbrauchen dieser Leistung aufweist.

28. Pedalvorrichtung nach einem der Ansprüche 8 bis 27, **dadurch gekennzeichnet, dass** sie in ein Fahrzeug oder ein stationäres Sporttrainingsgerät eingebaut ist.

FIG_1

FIG_16

FIG.2

FIG.3

FIG.4

FIG.5

FIG_6

51

5,6

4,7

8

4,11

12

10

3

2

14,64

53

55,56

1

57,54,61

54

58

60

$\frac{3}{2}r$

**FIG. 7**

51

12

4

3

5,6

7

14,64,2

8

1

53

11

55,56

61

54

10

57

58

60

**FIG. 8**

FIG. 9

FIG. 10

FIG.11

FIG.12

24

FIG.13

FIG.14

FIG. 15

## RÉFÉRENCES CITÉES DANS LA DESCRIPTION

### Documents brevets cités dans la description

- US 20020163159 A1
- WO 0230732 A1
- US 20030030245 A1
- FR 2747362 A